# EUROPEAN PATENT SPECIFICATION

(11) **EP 2 431 628 B1**
(45) Date of publication and mention of the grant of the patent: **11.06.2014**
(21) Application number: 10774781.8
(22) Date of filing: 23.03.2010
(51) Int. Cl.: F16D 65/18

(54) **ELECTRICALLY OPERATED DISC BRAKE DEVICE**
ELEKTRISCH BETRIEBENE SCHEIBENBREMSENVORRICHTUNG
DISPOSITIF DE FREIN À DISQUE À ACTIONNEMENT ÉLECTRIQUE

(30) Priority: 13.05.2009 JP 2009116908
(43) Date of publication of application: 21.03.2012
(73) Proprietor: Akebono Brake Industry Co., Ltd., Tokyo 103-8534 (JP)
(72) Inventor: SEKIGUCHI, Kazuhiro, Chuo-ku Tokyo (JP)
(74) Representative: Grünecker, Kinkeldey, Stockmair & Schwanhäusser
(86) International application number: PCT/JP2010/054963
(87) International publication number: WO 2010/131522

(56) References cited:
- WO-A1-2011/030839
- JP-A- 1 021 229
- JP-T- 2003 529 725

## Description

### Technical Field

This invention is related to an electric disc brake for braking a vehicle using an electric motor as a driving source.

### Background Art

An electric disc brake using an electric motor as a driving source does not require piping necessary for a hydraulic disc brake. As a result, the electric disc brake becomes easier to manufacture than the hydraulic disc brake and the manufacturing cost of the electric disc brake is reduced. Also, in the electric disc brake, the used brake fluid is not generated as in the hydraulic disc brake, so that an environmental load is reduced. Further, in the electric disc brake, there is no movement of the brake fluid, so that responsiveness is improved. Thus, many advantages are expected in the electric disc brake. In the electric disc brake, it is necessary to convert rotational motion of the electric motor into linear motion while increasing a force of the rotational motion in order to tightly push a pair of pads on both side surfaces of a rotor. In view of such circumstances, an electric disc brake having a reducer of a gear type etc. and a force-multiplication mechanism of a ball ramp type or a cam roller type is disclosed in Patent Literatures 1 to 7. In addition, in structures described in Patent Literatures 4, 5 and 7 of them, a brake at the time of travel is put by a hydraulic type and a brake at the time of parking is put by an electric type, respectively.

Fig. 9 shows one example of a structure described in Patent Literature 6 of them. Like a general hydraulic disc brake, in this electric disc brake, an inner pad 2 and an outer pad 3 are installed in a state of pinching a rotor 1 rotating with a wheel so as to enable axial displacement of this rotor 1. For this purpose, a support member (not shown) is supported (fixed in a knuckle constructing a suspension device) in a vehicle body in a state adjacent to this rotor 1. Both the inner and outer pads 2, 3 are supported in the support member so as to enable axial displacement in a state of pinching the rotor 1 from both axial sides (the outer side refers to the outside of a width direction of this vehicle body in a state of being incorporated into the vehicle body and the inner side refers to the center side likewise, respectively. Also, the axial direction refers to an axial direction of the rotor 1 unless otherwise noted. The same applies to all of the present description and the claims).

Also, a caliper 4 is incorporated into this support member so as to enable axial displacement. This caliper 4 is provided with a caliper claw 5 in the end of the outer side and cylinder space 6 inside the inner side portion, respectively. The caliper claw 5 is opposed to an outer side surface of the outer pad 3 and the inner pad 2 is pressed toward an inner side surface of the rotor 1 by a thrust generation mechanism 7 provided inside the cylinder space 6. When the inner pad 2 is pushed on the inner side surface of the rotor 1 by the thrust generation mechanism 7 at the time of braking, the caliper 4 is displaced to the inner side and the caliper claw 5 pushes the outer pad 3 on an outer side surface of the rotor 1. As a result, this rotor 1 is tightly pinched from both axial sides and a brake is put. The above configuration and action are similar to those of the hydraulic disc brake widely implemented.

For the electric disc brake, a gear type reducer 10, the thrust generation mechanism 7 and a piston member 11 are provided between an inner side surface of the inner pad 2 and an output shaft 9 of an electric motor 8 in order to push the inner pad 2 on the inner side surface of the rotor 1 using the electric motor 8 as a driving source. A rotational force in which torque is increased while being decelerated by this reducer 10 is transmitted to a driving side rotor 13 constructing a force-multiplication mechanism of a ball lamp type through a feed screw engaging part 12, and the driving side rotor 13 rotates. The driving side rotor 13 parallel moves to the outer side by a function of the feed screw engaging part 12 until gaps between both the inner and outer pads 2, 3 and a side surface of the rotor 1 are eliminated. On the other hand, after the gaps are eliminated and the function of this feed screw engaging part 12 stops, the driving side rotor 13 rotates. Then, based on engagement (rolling contact) among plural driving side lamp grooves 14, 14 provided in an outer side surface of the driving side rotor 13, plural driven side lamp grooves 16, 16 provided in an inner side surface of a driven side stator 15 attached to an inner side surface of the piston member 11, and plural balls 17 pinched between both these lamp grooves 14, 16, a distance between the driving side rotor 13 and the driven side stator 15 is extended by a great force, with the result that an outer side surface of the piston member 11 is tightly pushed on the inner side surface of the inner pad 2.

For example, in order to apply a proper braking force to a wheel based on a pedal force applied to a brake pedal by the electric disc brake acting and constructed as described above, it is necessary to know a thrust force applied to both the inner and outer pads 2, 3 by the thrust generation mechanism 7. A structure of providing a part of a caliper (the inside of a piston part or a caliper claw) with an axial force sensor such as a strain sensor, for example, a piezoelectric element is disclosed in Patent Literatures 8 and 9.

However, in the structure for measuring a thrust force disclosed in Patent Literatures 8 and 9, the axial force sensor is incorporated into the caliper separately from a component of the thrust generation mechanism, so that incorporation efficiency is low and an increase in a manufacturing cost of the electric disc brake is caused. Also, arrangement of a harness for extracting a measured signal of this axial force sensor becomes complicated in the structure of incorporating the axial force sensor into the caliper claw as described in Patent Literature 8. Further, since prestress is not applied to the axial force sensor, it is disadvantageous to ensure measurement accuracy of this axial force sensor. Concretely, a relation between an axial force and a measured signal tends to become nonlinear and also it is difficult to ensure stability of the measured signal in the case where the axial force is small and it is difficult to ensure accuracy in the case of obtaining the axial force from the measured signal.

### Citation List

### Patent Literature

Patent Literature 1: JP-A-2000-291702
Patent Literature 2: JP-A-2001-173691
Patent Literature 3: JP-A-2001-311443
Patent Literature 4: JP-A-2003-014015
Patent Literature 5: JP-A-2003-065366
Patent Literature 6: JP-A-2004-169729
Patent Literature 7: JP-A-2008-045703
Patent Literature 8: JP-A-2004-183694
Patent Literature 9: JP-A-2005-090539

### Summary of Invention

The invention provides a structure in which an electric disc brake capable of stably obtaining a desired braking force can be obtained at low cost by being constructed so that a measuring unit including a thrust generation mechanism and a sensor in which prestress is applied to its own sensor or a measured part is easily incorporated into a caliper.

According to the invention, an electric disc brake apparatus includes a rotor rotating with a wheel, a support member supported in a vehicle body, an outer pad which is arranged in an outer side of an axial direction of the rotor and is supported in the support member so as to enable axial displacement, an inner pad which is arranged in an inner side of the axial direction and is supported in the support member so as to enable the axial displacement, a caliper including a caliper claw formed in an outer side end of the axial direction and opposed to an outer side surface of the outer pad, and accommodating space formed inside an inner side portion of the axial direction, the caliper being supported so as to enable axial displacement with respect to the support member, and an actuator which is arranged inside the accommodating space and presses the inner pad toward an inner side surface of the rotor. The actuator includes an electric motor, a force-multiplication mechanism for converting a rotational driving force of the electric motor into an axial thrust force and transmitting the force to the inner pad, and a sensor for measuring a push force applied from the force-multiplication mechanism to this inner pad. A rotating shaft which is rotated and driven by the electric motor and forms an input part of the force-multiplication mechanism is provided with an outward flange-shaped flange part. Thrust bearings are formed between the sensor and an inner side surface of the flange part. The thrust bearings and the flange part are accommodated inside a case unit. The case unit includes an inner case formed in a portion including an inner side from the thrust bearings, and an outer case which is formed in a portion including an outer side from the flange part and is coupled with this inner case in an inseparable state. An elastic member is formed between an inner side surface of the outer case and an outer side surface of the flange part. The elastic member urges the thrust bearings to a side of the inner case in which the sensor is installed.

In the structure described above, the case unit may be divided into two pieces in the axial direction. One piece of the divided case unit positioned in an inner side may be the inner case. The other piece of the divided case unit positioned in an outer side may be the outer case. The sensor, the thrust bearings, the flange part and the elastic member may be accommodated inside the case unit in a state of urging the sensor in the axial direction by the elastic member so that the thrust bearings are arranged in an outer side of the sensor and the flange part is arranged in an outer side of the thrust bearings and the elastic member is arranged in an outer side of the flange part. The outer case may be provided with a locking piece elastically projecting radially outwardly from an outer peripheral surface of a radial direction of the outer case. An inner peripheral surface of the radial direction of the accommodating space may be provided with a locking recess. The locking piece may engage with the locking recess, and the sensor, the thrust bearings, the flange part and the elastic member may be held inside the accommodating space through the case unit.

Also, in the structure described above, the elastic member having an axial elastic force may be attached to an outer side surface of the flange part. The sensor, the thrust bearings and the flange part may be accommodated inside the case unit in a state of elastically compressing the elastic member in the axial direction.

Also, in the structure described above, the case, arranged in a side opposite to the sensor with the flange part pinched, of the inner case and the outer case may be provided with an elastic piece as the elastic member. The elastic piece may urge the flange part toward the sensor.

Also, in the structure described above, the inner case may include a bottom plate part having a central hole into which the rotating shaft is rotatably inserted, and a cylindrical part folded in a direction near to the outer case from a radial peripheral edge of the bottom plate part. The outer case may include a bottom plate part having a central hole into which the rotating shaft is rotatably inserted, and a cylindrical part folded in a direction near to the inner case from a radial peripheral edge of the bottom plate part. The cylindrical part of the outer case may be externally fitted to the cylindrical part of the inner case. A distal edge of an inner side of the cylindrical part of the outer case may be provided with a protrusion piece folded radially inwardly. An engaging hole may be formed in a part of the cylindrical part of the inner case. The protrusion piece may enter the engaging hole, and the inner case and the outer case may be coupled in an inseparable state so as to enable axial relative displacement.

Also, in the structure described above, the outer case may be made of a case body including a holding recess which rotatably accommodates the flange part and is opened to an outer side. The inner case may be made of a snap ring locked in an opening side end of the holding recess. The thrust bearings, the flange part and the elastic member may be accommodated inside the case unit made of the case body and the snap ring in a state of urging the sensor in the axial direction by the elastic member so that the flange part is arranged in an outer side of the thrust bearings and the elastic member is arranged in an outer side of the flange part. The sensor may be incorporated into the case body. The case body may be coupled and fixed to an inner side end of the caliper.

Also, in the structure described above, the sensor may be made of a strain sensor which is attached to a surface of the case body and measures an urging force by the elastic member based on strain of the case body.

Also, in the structure described above, the sensor may be pinched between the thrust rolling bearings and the case body.

According to the electric disc brake of the embodiments of the invention configured as described above, a measuring unit including a thrust generation mechanism and the sensor in which prestress is applied to its own sensor or a measured part is easily incorporated into the caliper. As a result, the electric disc brake capable of stably obtaining a desired braking force can be obtained at low cost.

Other features and effects will be apparent from the mention of the embodiments and the appended claims.

### Brief Description of Drawings

Fig. 1 is a sectional view showing a first embodiment of the invention in which the lower part corresponds to a sectional portion of a-o-a of Fig. 2 and the right end and the upper part correspond to a sectional portion of b-o-b of Fig. 2, respectively.
Fig. 2 is a sectional view taken on line c-c of Fig. 1.
Fig. 3A is a sectional view showing a unit of combining a force-multiplication mechanism and an axial force sensor in a state of incorporating the unit into a caliper, and Fig. 3B is a sectional view showing the unit of combining the force-multiplication mechanism and the axial force sensor in a state before incorporating the unit into the caliper.
Fig. 4 is a view corresponding to d part of Fig. 3A, showing a second embodiment of the invention.
Fig. 5 is a sectional view of a caliper portion, showing a third embodiment of the invention.
Fig. 6 is a sectional view taken on line e-e of Fig. 5.
Fig. 7 is an exploded perspective view of the caliper portion of the third embodiment of the invention.
Fig. 8 is a view corresponding to f part of Fig. 5, showing a fourth embodiment of the invention.

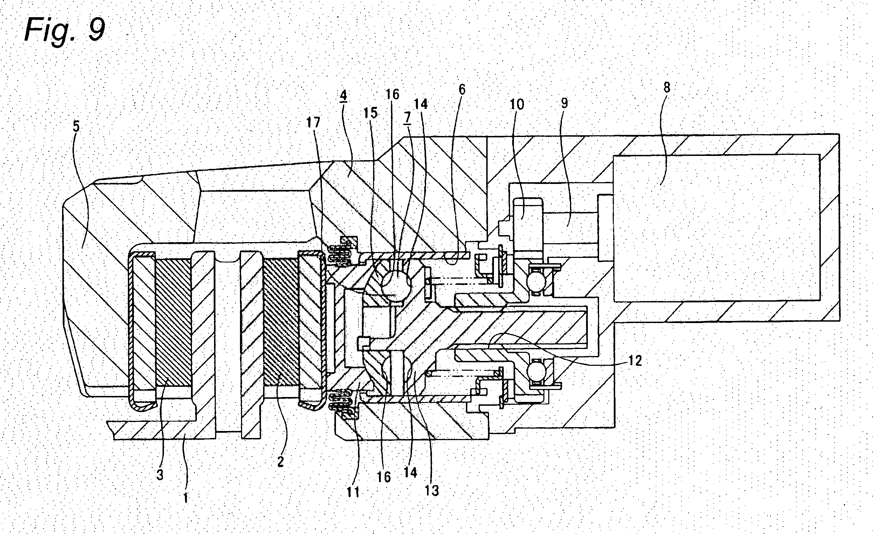

Fig. 9 is a sectional view of a caliper portion, showing one example of a conventional structure.

### Description of Embodiments

Embodiments of the invention will be described with reference to the drawings.

### First embodiment

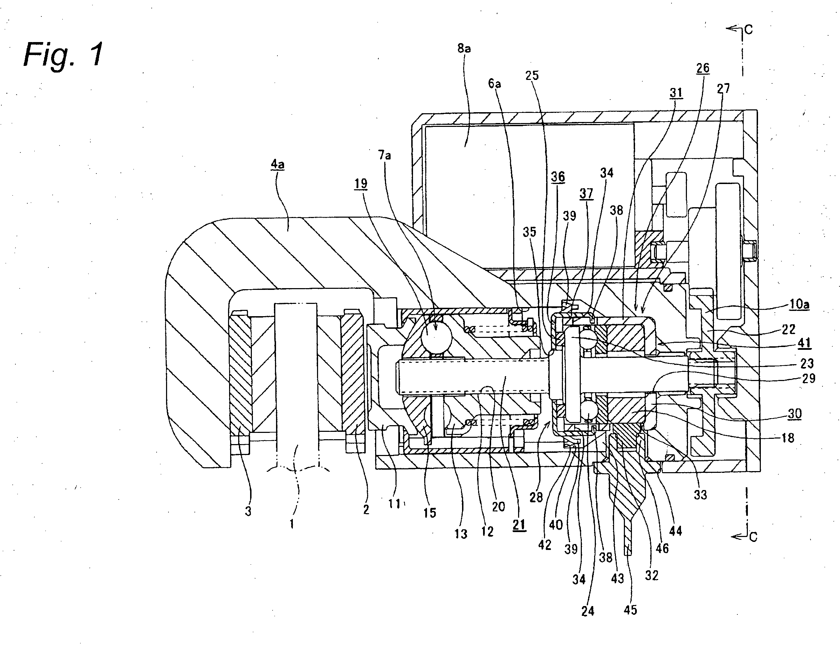

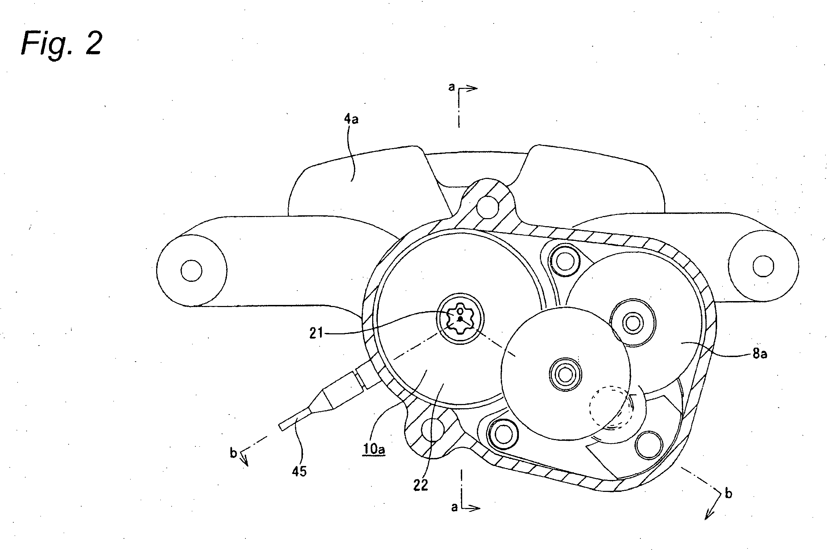

Figs. 1 to 3 show a first embodiment of the invention. In addition, the invention including the present embodiment relates to a structure for being constructed so that a measuring unit including a thrust generation mechanism 7a driven by an electric motor 8a and an axial force sensor 18 to which prestress is applied is easily incorporated into a caliper 4a. This caliper 4a is supported so as to enable axial displacement with respect to a support member (not shown) like a disc brake of a conventionally widely known floating caliper type including a hydraulic type. At the time of braking, the thrust generation mechanism 7a extends and both inner and outer pads 2, 3 are pushed on both side surfaces of a rotor 1. Also, in each of the embodiments of the invention, the thrust generation mechanism 7a is not limited to a structure of combining a ball ramp mechanism 19 with a feed screw mechanism 12 as shown in the drawings, and various mechanical thrust generation mechanisms for converting a force of a rotational direction into an axial force while increasing the force of the rotational direction, for example, a cam roller mechanism or a feed screw mechanism can be adopted.

In the embodiment, the thrust generation mechanism 7a is constructed and a proximal end of a driving spindle 21 whose distal half part (outer side half part) is screwed into a screw hole 20 bored in the center of a driving side rotor 13 is splined to the center of a reduction gear wheel 22 constructing a reducer 10a. An outward flange-shaped flange part 23 is formed in the axial middle of the driving spindle 21. An inner side surface of the flange part 23 is borne on thrust rolling bearings 24. The thrust rolling bearings 24 rotatably support the driving spindle 21 while bearing a thrust load which is applied to the driving spindle 21 and is turned to the inner side.

The flange part 23 and the thrust rolling bearings 24 are accommodated inside a case unit 26 together with the axial force sensor 18 and an elastic member 25 such as a corrugated leaf spring, a compression coil spring or rubber elastically deformable in an axial direction. This case unit 26 is formed by combining an inner case 27 and an outer case 28. This case unit 26 is formed by combining the inner case 27 and the outer case 28 in an inseparable state so as to enable slight relative displacement in the axial direction.

The inner case 27 includes a circular ring-shaped bottom plate part 30 having a circular through hole 29 in the center, and a cylindrical fixing side peripheral wall part 31 extending from the outer peripheral edge of the bottom plate part 30 toward the outer side. An extraction hole 33 for exposing the end of a connector 32 for extracting a measured signal of the axial force sensor 18 is formed in a position of one place in a circumferential direction of the proximal near half portion (inner near portion) of this fixing side peripheral wall part 31. Engaging holes 34, 34 long in the axial direction are formed in plural places (for example, positions of two to three places equally spaced in the circumferential direction) in the circumferential direction of the distal near half portion (outer near portion) of the fixing side peripheral wall part 31. In addition, as the structure for exposing the end of the connector 32, a notch opened in the distal edge (outer side edge) of the fixing side peripheral wall part 31 may be used instead of the extraction hole 33. However, in the case, a circumferential phase between this notch and each of the engaging holes 34, 34 is shifted (the notch is provided between the mutual engaging holes 34, 34 adjacent in the circumferential direction).

On the other hand, the outer case 28 includes a circular ring-shaped bottom plate part 36 having a circular through hole 35 in the center, and a cylindrical displacement side peripheral wall part 37 extending from the outer peripheral edge of the bottom plate part 36 toward the inner side. Then, tongue pieces projecting to the inner side are formed in the portions aligned with each of the engaging holes 34, 34 in positions of plural places in a circumferential direction of the distal edge (inner side edge) of this displacement side peripheral wall part 37. In a state of constructing the case unit 26 by combining both the inner side and outer side cases 27, 28, each of the tongue pieces is folded to the radial inside of this case unit 26 to form engaging pieces 38, 38, and each of these engaging pieces 38, 38 is engaged with each of the engaging holes 34, 34 so as to enable axial displacement. In this state, an axial dimension of the case unit 26 can expand and contract in the range capable of displacing each of the engaging pieces 38, 38 inside each of these engaging holes 34, 34.

Also, in plural places (for example, positions of two to three places equally spaced in the circumferential direction) in the circumferential direction of the displacement side peripheral wall part 37, locking pieces 39, 39 are respectively projected and formed in a state of projecting from an outer peripheral surface of this displacement side peripheral wall part 37 to the radial outside of the case unit 26. Each of these locking pieces 39, 39 is respectively formed by bending and raising a part of a metal plate constructing the displacement side peripheral wall part 37 of the outer case 28 to the radial outside of this outer case 28. The outside diameter side portions of the locking pieces 39, 39 are inclined in a direction in which the amount of projection from the outer peripheral surface of the displacement side peripheral wall part 37 becomes large as the position is near to the outer side so that the outer side ends of outside diameter side portions of the locking pieces 39, 39 are formed in locking edges for engaging with locking recesses 40 described below in the respective locking pieces 39, 39.

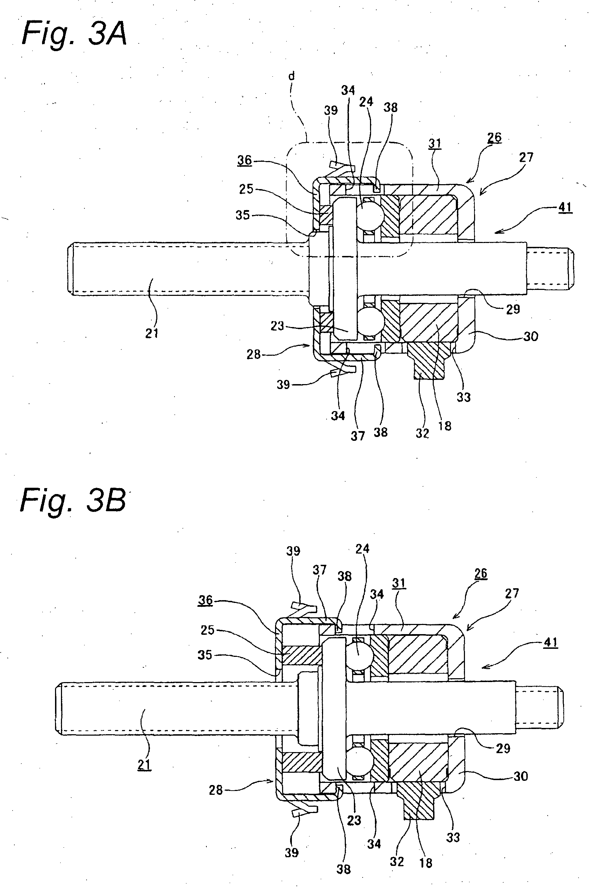

The flange part 23 formed in the middle of the driving spindle 21, the axial force sensor 18, the thrust rolling bearings 24 and the elastic member 25 are incorporated into such a case unit 26. In this incorporation work, after the axial force sensor 18 is first inserted into the back of the inner case 27, the driving spindle 21, the thrust rolling bearings 24 and the elastic member 25 are inserted into the inner case 27. Further, the distal end (inner side end) of the displacement side peripheral wall part 37 of the outer case 28 is externally fitted to the front end (outer side end) of the fixing side peripheral wall part 31 of the inner case 27 and each of the engaging pieces 38, 38 are further engaged with each of the engaging holes 34, 34. In this state, an axial force measuring unit 41 in which each of the members or the parts 21, 23, 18, 24, 25 is incorporated (subassembled) into the case unit 26 is obtained as shown in Fig. 3B. In addition, in this state, sufficient prestress is not yet applied to the axial force sensor 18 in order to ensure measurement accuracy.

The axial force measuring unit 41 is incorporated into the back end (inner side end) of cylinder space 6a provided in the inner side portion of the caliper 4a as shown in Fig. 1. An inside diameter of the back end of this cylinder space 6a is formed in substantially the same diameter as an outside diameter of the fixing side peripheral wall part 31 of the inner case 27, and the inner case 27 is held in the back end of this cylinder space 6a without backlash. However, in the portion aligned with the end of the connector 32 in this back end, a recessed groove 43 opened to the outer side and the inside diameter side of the cylinder space 6a is formed to prevent interference with the end of the connector 32. Also, the locking recess 40 is formed over the whole periphery in the portion near to the back end of the middle of the cylinder space 6a. The outer side end of this locking recess 40 forms a step surface 42 present in a direction perpendicular to the central axis of the cylinder space 6a.

When the axial force measuring unit 41 is incorporated into the back end of the cylinder space 6a, the case unit 26 is pushed into the cylinder space 6a while compressing the elastic member 25 in the axial direction. With this push work, each of the locking pieces 39, 39 is elastically deformed to the radial inside of the case 26 and passes through the outer side to the middle of the cylinder space 6a. Then, the inner case 27 is internally fitted to the back end of the cylinder space 6a and also, until each of the locking pieces 39, 39 is positioned in the inside diameter side of the locking recess 40, the outer case 28 is pushed into the cylinder space 6a. Then, each of the locking pieces 39, 39 elastically projects from the outer peripheral surface of the displacement side peripheral wall part 37 and enters the inside of the locking recess 40. When a force by which the case unit 26 is pushed into the cylinder space 6a is released in this state, each of the distal edge of the locking pieces 39, 39 abuts on the step surface 42 by an elastic force of the elastic member 25, and a situation in which the outer case 28 is displaced in a direction (outer side) of coming out of the cylinder space 6a is eliminated. Also, in this state, sufficient prestress becomes applied to the axial force sensor 18 in order to ensure measurement accuracy. Hence, a plug 46 provided in the end of a harness 45 is inserted into the cylinder space 6a through a connection hole 44 formed in the caliper 4a and this plug 46 is connected to the connector 32 and a measured signal of the axial force sensor 18 can be extracted.

Work of assembling the axial force measuring unit 41 can be done in wide space of the outside of the cylinder space 6a, and work of incorporating this axial force measuring unit 41 into this cylinder space 6a can easily be done by only pushing the axial force measuring unit 41 into the cylinder space 6a after a phase between the connector 32 and the recessed groove 43 is simply matched. Further, work of incorporating the driving side rotor 13 constructing the ball lamp mechanism 19 into the outer side of this axial force measuring unit 41 can easily be done by screwing the driving side rotor 13 into the outer side portion of the driving spindle 21 while rotating the portion projecting from the inner side end surface of the caliper 4a in the inner side end of the driving spindle 21. Also, work of incorporating other members can easily be done by inserting other members into the cylinder space 6a from an outer side opening. Then, in a state of incorporating this axial force measuring unit 41 into the cylinder space 6a, proper prestress becomes applied to the axial force sensor 18, and a relation between a measured signal of this axial force sensor 18 and an axial force applied to this axial force sensor 18 with braking can be made substantially linear. As a result, the axial force can be obtained with sufficient accuracy even when a configuration of a calculator for processing this measured signal is simplified.

### Second embodiment

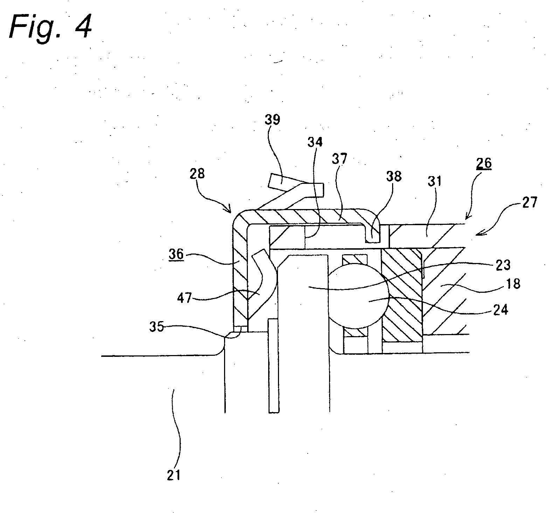

Fig. 4 shows a second embodiment of the invention. In the case of the present embodiment, elastic pieces 47 projecting to the inner side are respectively formed in plural places in a circumferential direction of a bottom plate part 36 of an outer case 28, and an outer side surface of a flange part 23 formed in the middle of a driving spindle 21 is pressed by each of these elastic pieces 47. The elastic member 25 (see Figs. 1 and 3) incorporated in the first embodiment described above is omitted, and the flange part 23 is elastically pressed toward an axial force sensor 18 (see Figs. 1 and 3) by each of the elastic pieces 47. Since configurations and action of the other portions are similar to those of the first embodiment described above, illustration and explanation as to the same portions are omitted.

### Third embodiment

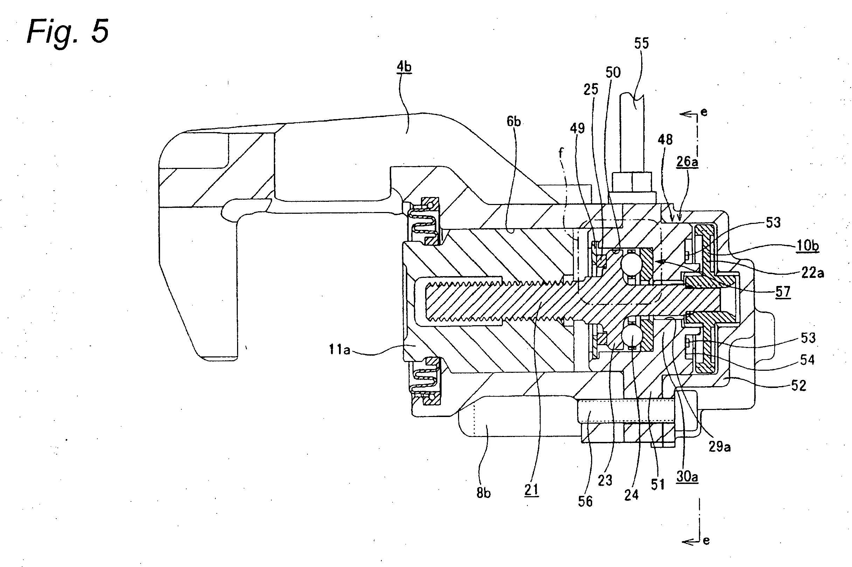

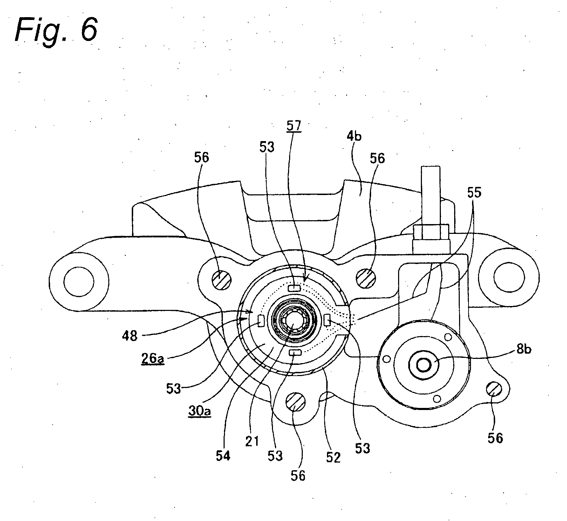

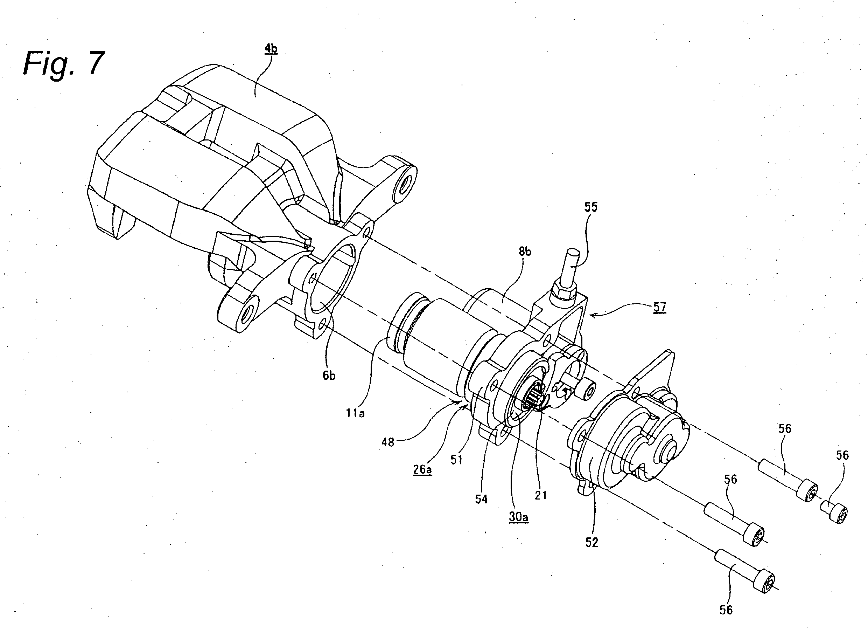

Figs. 5 to 7 show a third embodiment of the invention. In the case of the present embodiment, a case body 48 and a snap ring 49 correspond to an inner case and an outer case constructing a case unit 26a for storing thrust rolling bearings 24 and a flange part 23. The case body 48 which is the inner case of them is formed integrally to an attachment protrusion 51, and includes a holding recess 50 which is opened to the outer side and can accommodate an elastic member 25 in addition to the flange part 23 and the thrust rolling bearings 24. A driving spindle 21 in which the middle is provided with the flange part 23 is projected to the outside of this case body 48 through a through hole 29a bored in the middle of a bottom plate part 30a of the case body 48, and is splined to a reduction gear wheel 22a of a reducer 10b. Also, the attachment protrusion 51 formed on an outer peripheral surface of the case body 48 is coupled and fixed by plural bolts 56, 56 to the inner side end of a caliper 4b together with a reducer case 52 for storing the reducer 10b.

The outer peripheral edge of the snap ring 49 is locked in the outer side end of an inner peripheral surface of the holding recess 50 in the case body 48 as described above. Then, in order from the inner side (side of the back end surface of this holding recess 50), the thrust rolling bearings 24, the flange part 23 and the elastic member 25 are formed between the back end surface of this holding recess 50 and an inner side surface of this snap ring 49. The snap ring 49 is locked in the inner peripheral surface of the holding recess 50 in a state of compressing this elastic member 25 in an axial direction by a proper amount (the extent to which the attach portions of strain sensors 53, 53 described below in the case body 48 are elastically deformed properly).

Further, an annular recess 54 is formed in the radial middle of an inner side end surface of the case body 48 over the whole periphery. Then, each of the strain sensors 53, 53 is attached to the bottom of this annular recess 54 by adhesion etc., and strain of the inner side end of the case body 48 can be measured. In an illustrated example, each of the strain sensors 53, 53 is installed in positions of four places equally spaced in a circumferential direction of the bottom of the annular recess 54. Then, a measured signal of each of the strain sensors 53, 53 extracted by harnesses 55, 55 is processed by a bridge circuit (not shown) etc. and strain of the inner side end of the case body 48 is obtained and further, an axial force applied to the driving spindle 21 is obtained from this strain. Since prestress is applied to the inner side end of the case body 48 by the elastic member 25 in order to measure this strain, a relation between the measured signal of each of the strain sensors 53, 53 and the axial force can be made substantially linear, and the axial force can be obtained accurately even when a configuration of a calculator for processing this measured signal is simplified like the case of the first embodiment described above.

Also, in the case of the present embodiment, by the snap ring 49 with respect to the case body 48, the thrust rolling bearings 24, the flange part 23 and the elastic member 25 are supported and also a piston member 11a is supported through the driving spindle 21 and further an electric motor 8b is supported and thereby, a thrust generation unit 57 is constructed. Since assembly work of this thrust generation unit 57 can be done in a wide place independently of cylinder space 6b of the caliper 4b, it is easy to do the work. Further, work of incorporating the thrust generation unit 57 into the caliper 4b can easily be done by abutting the attachment protrusion 51 on an inner side end surface of the caliper 4b while inserting the piston member 11 a into the cylinder space 6b and further coupling and fixing the attachment protrusion 51 to the caliper 4b together with the reducer case 52 by each of the bolts 56, 56. In addition, in the illustrated example, as a thrust generation mechanism for converting rotational motion of the driving spindle 21 into linear motion of the piston member 11 a, a simple feed screw mechanism is used, but in a structure of this thrust generation mechanism, various structures known conventionally including the structure shown in the first embodiment described above can be adopted.

### Fourth embodiment

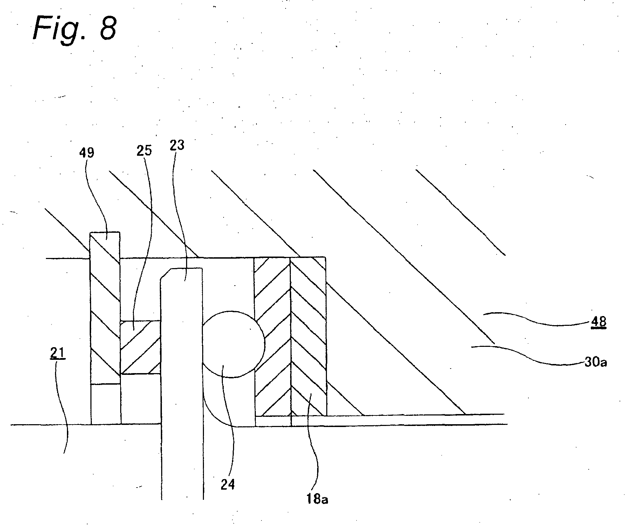

Fig. 8 shows a fourth embodiment of the invention. In the case of the present example, an axial force sensor 18a for measuring a force in an axial direction by being compressed is pinched between thrust rolling bearings 24 and an outer side surface of a bottom plate part 30a of a case body 48. Then, it is constructed so that an axial force applied to a driving spindle 21 at the time of braking can be measured by the axial force sensor 18a. Since configurations and action of the other portions are similar to those of the third embodiment described above, illustration and explanation as to the same portions are omitted.

### Industrial Applicability

The invention can be used in an electric disc brake.

### Reference Signs List

- 1: ROTOR
- 2: INNER PAD
- 3: OUTER PAD
- 4,4a,4b: CALIPER
- 5: CALIPER CLAW
- 6,6a,6b: CYLINDER SPACE
- 7,7a: THRUST GENERATION MECHANISM
- 8,8a,8b: ELECTRIC MOTOR
- 9: OUTPUT SHAFT
- 10,10a,10b: REDUCER
- 11,11a: PISTON MEMBER
- 12: FEED SCREW MECHANISM
- 13: DRIVING SIDE ROTOR
- 14: DRIVING SIDE LAMP GROOVE
- 15: DRIVEN SIDE STATOR
- 16: DRIVEN SIDE LAMP GROOVE
- 17: BALL
- 18,18a: AXIAL FORCE SENSOR
- 19: BALL LAMP MECHANISM
- 20: SCREW HOLE
- 21: DRIVING SPINDLE
- 22,22a: REDUCTION GEAR WHEEL
- 23: FLANGE PART
- 24: THRUST ROLLING BEARING
- 25: ELASTIC MEMBER
- 26,26a: CASE UNIT
- 27: INNER CASE
- 28: OUTER CASE
- 29,29a: THROUGH HOLE
- 30,30a: BOTTOM PLATE PART
- 31: FIXING SIDE PERIPHERAL WALL PART
- 32: CONNECTOR
- 33: EXTRACTION HOLE
- 34: ENGAGING HOLE
- 35: THROUGH HOLE
- 36: BOTTOM PLATE PART
- 37: DISPLACEMENT SIDE PERIPHERAL WALL PART
- 38: ENGAGING PIECE
- 39: LOCKING PIECE
- 40: LOCKING RECESS
- 41: AXIAL FORCE MEASURING UNIT
- 42: STEP SURFACE
- 43: RECESSED GROOVE
- 44: CONNECTION HOLE
- 45: HARNESS
- 46: PLUG
- 47: ELASTIC PIECE
- 48: CASE BODY
- 49: SNAP RING
- 50: HOLDING RECESS
- 51: ATTACHMENT PROTRUSION
- 52: REDUCER CASE
- 53: STRAIN SENSOR
- 54: ANNULAR RECESS
- 55: HARNESS
- 56: BOLT
- 57: THRUST GENERATION UNIT

## Claims

1. An electric disc brake apparatus comprising:
a rotor (1) configured to rotate with a wheel;
a support member supported in a vehicle body;
an outer pad (3), arranged in an outer side in an axial direction of the rotor (1),
and supported by the support member so as to be displaced in the axial direction;
an inner pad (2), arranged in an inner side in the axial direction, and supported by the support member so as to be displaced in the axial direction;
a caliper (4a,4b), including a caliper claw provided in an outer side end of the axial direction and opposed to an outer side surface of the outer pad (3), and an accommodating space (6a,6b) formed inside an inner side portion of the axial direction, the caliper (4a,4b) being supported so as to be displaced in the axial direction with respect to the support member; and
an actuator, arranged in the accommodating space (6a,6b), and configured to press the inner pad (2) toward an inner side surface of the rotor (1),
wherein the actuator includes:
an electric motor (8a,8b);
a force-multiplication mechanism, configured to convert a rotational driving force of the electric motor (8a,8b) into an axial thrust force and to transmit the force to the inner pad (2); and
a sensor (18,18a,53), configured to measure a pressing force applied from the force-multiplication mechanism to the inner pad (2), **characterised in that** a rotating shaft (21) is rotated by the electric motor (8a,8b) and
performs as an input part of the force-multiplication mechanism is provided with a flange part (23) projecting outwardly in a radial direction from the rotating shaft (21),
a thrust bearing (24) is provided between the sensor (18,18a,53) and an inner side surface of the flange part (23),
the thrust bearing (24) and the flange part (23) are accommodated in a case unit (26,26a), and
the case unit (26,26a) includes an inner case (27,49) provided in a portion including an inner side from the thrust bearings (24), and an outer case (28,48) provided in a portion including an outer side from the flange part (23) and is coupled with this inner case (27,49) in an inseparable state, and
an elastic member (25,47) is provided between an inner side surface of the outer case (28,48) and an outer side surface of the flange part (23), and
wherein the elastic member (25,47) urges the thrust bearing (24) to a side of the inner case (27,49) in which the sensor (18,18a,53) is installed.

2. An electric disc brake apparatus according to claim 1, wherein the case unit (26) is divided into two pieces in the axial direction, one piece of the divided case unit (26) positioned in an inner side is the inner case (27), and the other piece of the divided case unit (26) positioned in an outer side is the outer case (28),
the sensor (18), the thrust bearings (24), the flange part (23) and the elastic member (25) are accommodated in the case unit (26) in a state of urging the sensor (18) in the axial direction by the elastic member (25), so that the thrust bearing (24) is arranged in an outer side of the sensor (18), the flange part (23) is arranged in an outer side of the thrust bearing (24), and the elastic member (25) is arranged in an outer side of the flange part (23),
the outer case (28) is provided with a locking piece (39) elastically projecting outwardly in the radial direction of the outer case (28) from an outer peripheral surface of the radial direction of the outer case (28),
an inner peripheral surface of the radial direction of the accommodating space (6a) is provided with a locking recess (40), and
the locking piece (39) engages with the locking recess (40), and the sensor (18), the thrust bearing (24), the flange part (23) and the elastic member (25) are held in the accommodating space (6a) through the case unit (26).

3. An electric disc brake apparatus according to claim 2, wherein the elastic member (25) having an axial elastic force is attached to an outer side surface of the flange part (23), and
the sensor (18), the thrust bearing (24) and the flange part (23) are accommodated in the case unit (26) in a state where the elastic member (25) is elastically compressed in the axial direction.

4. An electric disc brake apparatus according to claim 2, wherein one of the inner case (27) and the outer case (28) which is arranged in a side opposite to the sensor (18) with the flange part (23) pinched is provided with an elastic piece (47) as the elastic member (25), and
the elastic piece (47) urges the flange part (23) toward the sensor (18).

5. An electric disc brake apparatus according to claim 2, wherein the inner case (27) includes a bottom plate part (30) having a central hole (29) into which the rotating shaft (21) is rotatably inserted, and a cylindrical part (31) folded in a direction near to the outer case (28) from a radial peripheral edge of the bottom plate part (30),
the outer case (28) includes a bottom plate part (36) having a central hole (35) into which the rotating shaft (21) is rotatably inserted, and a cylindrical part (37) folded in a direction near to the inner case (27) from a radial peripheral edge of the bottom plate part (36),
the cylindrical part (37) of the outer case (28) is externally fitted to the cylindrical part (31) of the inner case (27),
a distal edge of an inner side of the cylindrical part (37) of the outer case (28) is provided with a protrusion piece (38) folded inwardly in the radial direction,
an engaging hole (34) is formed in a part of the cylindrical part (31) of the inner case (27), and
the protrusion piece (38) is inserted into the engaging hole (34), and the inner case (27) and the outer case (28) are coupled in an inseparable state so as to relatively move in the axial direction.

6. An electric disc brake apparatus according to claim 1, wherein the outer case is made of a case body (48) including a holding recess (50) which rotatably accommodates the flange part (23) and is opened to an outer side,
the inner case is made of a snap ring (49) locked in an opening side end of the holding recess (50),
the thrust bearing (24), the flange part (23) and the elastic member (25) are accommodated in the case unit (26a) made of the case body (48) and the snap ring (49) in a state where the sensor (18a,53) is urged in the axial direction by the elastic member (25) so that the flange part (23) is arranged in an outer side of the thrust bearing (24) and the elastic member (25) is arranged in an outer side of the flange part (23),
the sensor (18a,53) is incorporated into the case body (48), and
the case body (48) is fixed to an inner side end of the caliper (4b).

7. An electric disc brake apparatus according to claim 6, wherein the sensor is made of a strain sensor (53) which is attached to a surface of the case body (48) and measures an urging force by the elastic member (25) based on strain of the case body (48).

8. An electric disc brake apparatus according to claim 6, wherein the sensor (18a) is pinched between the thrust rolling bearings (24) and the case body (48).

## Patentansprüche

1. Eine elektrische Scheibenbremsvorrichtung mit:
einem Rotor (1) konfiguriert um mit einem Rad zu drehen;
ein Lagerelement gelagert in einem Fahrzeugkörper;
einem äußeren Belag (3), angeordnet in einer äußeren Seite in einer Axialrichtung des Rotors (1), und gelagert durch das Lagerelement, sodass dieser in der Axialrichtung verlagert ist;
einen innerer Belag (2), angeordnet an einer inneren Seite in der Axialrichtung, und
gelagert durch das Lagerelement, sodass dieser in Axialrichtung verlagert ist;
eine Bremszange (4a, 4b) die eine Zangenkralle beinhaltet, vorgesehen an einem äußeren Seitenende der Axialrichtung und gegenüberliegend zu einer äußeren Seitenfläche des äußeren Belags (3), und
einen Aufnahmeraum (6a, 6b), ausgebildet innerhalb eines inneren Seitenabschnitt der axialen Richtung, die Bremszange (4a, 4b) ist gelagert, sodass diese in Axialrichtung mit Bezug auf das Lagerelement verlagert ist; und
einen Aktuator, angeordnet in dem Aufnahmeraum (6a, 6b) und konfiguriert um den inneren Belag (2) zu einer inneren Seitenfläche des Rotors (1) zu pressen, wobei der Aktuator beinhaltet:
einen Elektromotor (8a, 8b);
einen Kraft-Multiplikations-Mechanismus, konfiguriert um eine Drehantriebskraft des Elektromotors (8a, 8b) in eine axiale Druckkraft zu konvertieren und die Kraft zu dem inneren Belag (2) zu übertragen; und
einen Sensor (18, 18a, 53), konfiguriert um einen Druckkraft, aufgebracht von dem Kraft-Multiplikations-Mechanismus zu dem inneren Belag (2), zu messen,
**dadurch gekennzeichnet, dass**
eine Drehwelle (21) durch den Elektromotor (8a, 8b) gedreht ist und als ein Eingabeteil des Kraft-Multiplikations-Mechanismus dient, mit einem Flanschteil (23) vorgesehen ist, der nach außen in radialer Richtung von der Drehwelle (21) vorspringt,
ein Drucklager (24) ist zwischen dem Sensor (18, 18a, 53) und einer inneren Seitenfläche des Flanschteils (23) vorgesehen, das Drucklager (24) und der Flanschteil (23) sind in einer Gehäuseeinheit (26, 26a) aufgenommen, und die Gehäuseeinheit (26, 26a) beinhaltet ein inneres Gehäuse (27, 49), vorgesehen in einem Abschnitt der eine innere Seite des Drucklagers (24) beinhaltet, und
ein äußeres Gehäuse (28, 48), vorgesehen in einem Abschnitt der eine äußere Seite des Flanschteils (23) beinhaltet und mit diesem inneren Gehäuse (27, 49) in einem nicht trennbaren Zustand gekoppelt ist, und
ein elastisches Element (25, 47) ist zwischen der inneren Seitenfläche des äußeren Gehäuses (28, 48) und einer äußeren Seitenfläche des Flanschteils (23) vorgesehen,
und
wobei das elastische Element (25, 47) das Drucklager (24) zu einer Seite des inneren Gehäuses (27, 49) in dem der Sensor (18, 18a, 53) installiert ist drückt.

2. Eine elektrische Scheibenbremsvorrichtung gemäß Anspruch 1 wobei die Gehäuseeinheit (26) in zwei Stücke in axialer Richtung geteilt ist, ein Stück der geteilten Gehäuseeinheit (26) positioniert an einer inneren Seite, ist das innere Gehäuse (27), und das andere Stück der geteilten Gehäuseeinheit (26) positioniert an einer äußeren Seite, ist das äußere Gehäuse (28),
der Sensor (18), die Drucklager (24), der Flanschteil (23) und das elastische Element (25) sind in der Gehäuseeinheit (26) aufgenommen in einen Zustand des Drückens des Sensors (18) in die axiale Richtung durch das elastische Element (25), sodass das Drucklager in einer äußeren Seite des Sensors (18) angeordnet ist, der Flanschteil (23) ist in einer äußeren Seite des Drucklagers (24) angeordnet, und das elastische Element (25) ist in einer äußeren Seite des Flanschteils (23) angeordnet, das äußere Gehäuse (28) ist mit einem Verriegelungsstück (39) vorgesehen, das elastisch in der radialen Richtung des äußeren Gehäuses (28) von einer äußeren Umfangsfläche der radialen Richtung des äußeren Gehäuses (28) vorspringt,
eine innere Umfangsfläche der radialen Richtung des Aufnahmeraums (6a) ist mit einer Verriegelungsausnehmung (40) vorgesehen, und
das Verriegelungsstück (39) greift in die Verriegelungsausnehmung (40) ein, und der Sensor (18), das Drucklager (24), der Flanschteil (23) und das elastische Element (25) sind in dem Aufnahmeraum (6a) durch die Gehäuseeinheit (26) gehalten.

3. Eine elektrische Scheibenbremsvorrichtung gemäß Anspruch 2, wobei das elastische Element (25), das eine axiale elastische Kraft aufweist, an der äußeren Seitenfläche des Flanschteils (23) angebracht ist, und
der Sensor (18), das Drucklager (24) und der Flanschteil (23) in der Gehäuseeinheit (26) in einen Zustand aufgenommen sind, in dem das elastische Element (25) elastisch in der axialen Richtung komprimiert ist.

4. Eine elektrische Scheibenbremsvorrichtung gemäß Anspruch 2, wobei eines des inneren Gehäuses (27) und des äußeren Gehäuses (28) das in einer Seite gegenüberliegend zu dem Sensor (18) mit dem Flanschteil (23) geklemmt ist, mit einem elastischen Stück (47) als das elastische Element (25) vorgesehen ist, und das elastische Stück (47) drückt den Flanschteil (23) zu dem Sensor (18).

5. Eine elektrische Scheibenbremsvorrichtung gemäß Anspruch 2, wobei das innere Gehäuse (27) einen Bodenplattenteil (30), der ein zentrales Loch (29) hat, in dem die Drehwelle (21) drehbar eingesetzt ist, und ein zylindrischer Teil (23), gefaltet in einer Richtung nahe zu dem äußeren Gehäuse (28) von einer radialen Umfangskante des Bodenplattenteils (30), beinhaltet,
das äußere Gehäuse (28) einen Bodenplattenteil (36), der ein zentrales Loch (35) hat, in dem die Drehwelle (21) drehbar eingesetzt ist, und ein zylindrischer Teil (37), gefaltet in eine Richtung nahe zu dem inneren Gehäuse (27) von einer radialen Umfangskante des Bodenplattenteils (36), beinhaltet,
der zylindrische Teil (37) des äußeren Gehäuses (28) ist extern zu dem zylindrischen Teil (31) des inneren Gehäuses (27) angebracht,
eine Endkante an einer inneren Seite des zylindrischen Teils (37) des äußeren Gehäuses (28) ist mit einem Vorsprungsstück (38) vorgesehen, das nach innen in radialer Richtung gefaltet ist,
ein Eingriffsloch (34) ist in einem Teil des zylindrischen Teils (31) des inneren Gehäuses (27) ausgebildet, und
das Vorsprungsstück (38) ist in das Eingriffsloch (34) eingesetzt, und
das innere Gehäuse (27) und das äußere Gehäuse (28) sind in einem nicht trennbaren Zustand gekoppelt, sodass diese sich relativ in der axialen Richtung bewegen.

6. Eine elektrische Scheibenbremsvorrichtung gemäß Anspruch 1, wobei das äußere Gehäuse aus einem Gehäusekörper (48) gemacht ist, der eine Halteausnehmung (50) beinhaltet, die drehbar den Flanschteil (23) aufnimmt und zu einer äußeren Seite geöffnet ist,
das innere Gehäuse ist aus einem Schnappring (49) gemacht, der in einem Öffnungsseitenende der Halteausnehmung (50) gesichert ist,
das Drucklager (24), der Flanschteil (23) und das elastische Element (25) sind in der Gehäuseeinheit (26a) aufgenommen, die aus dem Gehäusekörper (48) und dem Schnappring (49) gemacht ist, in einem Zustand in dem der Sensor (18a, 53) in die axiale Richtung durch das elastische Element (25) gedrückt ist, sodass der
Flanschteil (23) in einer äußeren Seite des Drucklagers (24) angeordnet ist und das elastische Element (25) in einer äußeren Seite des Flanschteils (23) angeordnet ist, der Sensor (18a, 53) ist in den Gehäusekörper (48) eingearbeitet, und
der Gehäusekörper (48) ist an einem inneren Seitenende der Bremszange (4b) fixiert.

7. Eine elektrische Scheibenbremsvorrichtung gemäß Anspruch 6, wobei der Sensor als ein Spannungssensor (53) ausgebildet ist, der an einer Fläche des Gehäusekörpers (48) angebracht ist und eine Druckkraft durch das elastische Element (25) auf Grundlage der Spannung in dem Gehäusekörper (48) misst.

8. Eine elektrische Scheibenbremsvorrichtung gemäß Anspruch 6, wobei der Sensor (18a) zwischen die Druckrolliager (24) und den Gehäusekörper (48) geklemmt ist.

## Revendications

1. Dispositif de frein à disque électrique comprenant :
un rotor (1) configuré pour tourner avec une roue ;
un élément de support supporté dans la carrosserie d'un véhicule ;
une plaquette externe (3) agencée du côté externe dans la direction axiale du rotor (1), et supportée par l'élément de support de façon à être déplacée dans la direction axiale ;
une plaquette interne (2) agencée du côté interne dans la direction axiale, et supportée par l'élément de support de façon à être déplacée dans la direction axiale ;
un étrier (4a, 4b), incluant une pince d'étrier disposée sur l'extrémité du côté externe de la direction axiale et opposée à la surface de côté externe de la plaquette externe (3), et un espace de logement (6a, 6b) formé à l'intérieur de la partie de côté interne de la direction axiale, l'étrier (4a, 4b) étant supporté de manière à être déplacé dans la direction axiale par rapport à l'élément de support ; et
un dispositif d'actionnement, agencé dans l'espace de logement (6a, 6b) et configuré pour exercer une pression sur la plaquette interne (2) vers la surface de côté interne du rotor (1),
dans lequel le dispositif d'actionnement comporte :
un moteur électrique (8a, 8b) ;
un mécanisme de multiplication de force, configuré pour convertir la force d'entraînement en rotation du moteur électrique (8a, 8b) en une force de poussée axiale et pour transmettre la force à la plaquette interne (2) ; et
un capteur (18, 18a, 53) configuré pour mesurer la force de pression appliquée à la plaquette interne (2) par le mécanisme de multiplication de force,
**caractérisé en ce que**
le moteur électrique (8a, 8b) fait tourner un arbre rotatif (21) qui fonctionne en tant que partie d'entrée du mécanisme de multiplication de force et qui est muni d'une partie de bride (23) se projetant vers l'extérieur dans la direction radiale par rapport à l'arbre rotatif (21),
un palier de butée (24) est prévu entre le capteur (18, 18a, 53) et la surface de côté interne de la partie de bride (23),
le palier de butée (24) et la partie de bride (23) sont reçus dans une unité de boîtier (26, 26a), et
l'unité de boîtier (26, 26a) comporte un boîtier interne (27, 49) prévu dans une partie incluant la face interne des paliers de poussée (24), et un boîtier externe (28, 48) prévu dans une partie incluant la face externe de la partie de bride (23), et est couplée avec ce boîtier interne (27, 49) dans un état inséparable, et
un élément élastique (25, 47) est prévu entre la surface de côté interne du boîtier externe (28, 48) et la surface de côté externe de la partie de bride (23), et dans lequel l'élément élastique (25, 47) pousse le palier de butée (24) vers un côté du boîtier interne (27, 49) dans lequel est installé le capteur (18, 18a, 53).

2. Dispositif de frein à disque électrique selon la revendication 1, dans lequel l'unité de boîtier (26) est divisée en deux pièces dans la direction axiale, une pièce de l'unité de boîtier divisée (26) positionnée du côté interne constitue le boîtier interne (27) et l'autre pièce de l'unité de boîtier divisée (26) positionnée du côté externe constitue le boîtier externe (28),
le capteur (18), les paliers de butée (24), la partie de bride (23) et l'élément élastique (25) sont reçus dans l'unité de boîtier (26) dans un état de poussée du capteur (18) dans la direction axiale par l'élément élastique (25), de sorte que le palier de butée (24) est agencé du côté externe du capteur (18), la partie de bride (23) est agencée du côté externe du palier de poussée (24) et l'élément élastique (25) est agencé du côté externe de la partie de bride (23),
le boîtier externe (28) est muni d'une pièce de blocage (39) se projetant de manière élastique vers l'extérieur dans la direction radiale du boîtier externe (28) depuis la surface périphérique externe de la direction radiale du boîtier externe (28),
la surface périphérique interne de la direction radiale de l'espace de logement (6a) est munie d'une cavité de blocage (40), et
la pièce de blocage (39) vient en prise avec la cavité de blocage (40), et le capteur (18), le palier de butée (24), la partie de bride (23) et l'élément élastique (25) sont maintenus dans l'espace de logement (6a) par l'intermédiaire de l'unité de boîtier (26).

3. Dispositif de frein à disque électrique selon la revendication 2, dans lequel l'élément élastique (25) ayant une force élastique axiale est fixé à la surface de côté externe de la partie de bride (23), et
le capteur (18), le palier de butée (24) et la partie de bride (23) sont reçus dans l'unité de boîtier (26) dans un état où l'élément élastique (25) est comprimé de manière élastique dans la direction axiale.

4. Dispositif de frein à disque électrique selon la revendication 2, dans lequel un boîtier parmi le boîtier interne (27) et le boîtier externe (28) qui est agencé sur un côté opposé au capteur (18) avec la partie de bride (23) pincée, est muni d'une pièce élastique (47) en tant qu'élément élastique (25), et
la pièce élastique (47) pousse la partie de bride (23) vers le capteur (18).

5. Dispositif de frein à disque électrique selon la revendication 2, dans lequel le boîtier interne (27) comporte une partie de plaque inférieure (30) ayant un trou central (29) dans lequel est inséré de manière rotative l'arbre rotatif (21), et une partie cylindrique (31) repliée dans une direction proche du boîtier externe (28) depuis le bord périphérique radial de la partie de plaque inférieure (30),
le boîtier externe (28) comporte une partie de plaque inférieure (36) ayant un trou central (35) dans lequel est inséré de manière rotative l'arbre rotatif (21), et une partie cylindrique (37) repliée dans une direction proche du boîtier interne (27) depuis le bord périphérique radial de la partie de plaque inférieure (36),
la partie cylindrique (37) du boîtier externe (28) est ajustée de manière externe à la partie cylindrique (31) du boîtier interne (27),
le bord distal de la face interne de la partie cylindrique (37) du boîtier externe (28) est muni d'une pièce en saillie (38) repliée vers l'intérieur dans la direction radiale,
un trou d'engagement (34) est formé dans une partie de la partie cylindrique (31) du boîtier interne (27),
et
la pièce en saillie (38) est insérée dans le trou d'engagement (34), et le boîtier interne (27) et le boîtier externe (28) sont couplés dans un état inséparable de façon à se déplacer de manière relative dans la direction axiale.

6. Dispositif de frein à disque électrique selon la revendication 1, dans lequel le boîtier externe est fait d'un corps de boîtier (48) incluant une cavité de retenue (50) qui reçoit de manière rotative la partie de bride (23) et est ouverte du côté externe,
le boîtier interne est fait d'un anneau élastique (49) bloqué sur l'extrémité du côté ouverture de la cavité de retenue (50),
le palier de butée (24), la partie de bride (23) et l'élément élastique (25) sont reçus dans l'unité de boîtier (26a) faite du corps de boîtier (48) et de l'anneau élastique (49) dans un état où le capteur (18a, 53) est poussé dans la direction axiale par l'élément élastique (25), de sorte que la partie de bride (23) est agencée du côté externe du palier de butée (24) et l'élément élastique (25) est agencé du côté externe de la partie de bride (23),
le capteur (18a, 53) est incorporé dans le corps de boîtier (48), et
le corps de boîtier (48) est fixé sur l'extrémité du côté interne de l'étrier (4b).

7. Dispositif de frein à disque électrique selon la revendication 6, dans lequel le capteur est fait d'un capteur de déformation (53) qui est fixé à la surface du corps de boîtier (48) et mesure la force de poussée de l'élément élastique (25) en se basant sur la déformation du corps de boîtier (48).

8. Dispositif de frein à disque électrique selon la revendication 6, dans lequel le capteur (18a) est pincé entre les paliers de roulement de butée (24) et le corps de boîtier (48).
